# FASCICULE DE BREVET EUROPEEN

(11) **EP 1 680 654 B1**
(45) Date de publication et mention de la délivrance du brevet: **01.08.2018**
(21) Numéro de dépôt: 04818165.5
(22) Date de dépôt: 17.09.2004
(51) Int. Cl.: G01L 1/24, G01N 21/88

(54) **PROCEDE D EVALUATION A DES FINS DE CONTROLE DES CONSEQUENCES D UN IMPACT SUR UNE PIECE EN MATERIAU COMPOSITE STRUCTURALE**
VERFAHREN ZUR BEURTEILUNG DER KONSEQUENZEN EINER SCHLAGEINWIRKUNG AUF EIN STÜCK STRUKTUR-VERBUNDMATERIAL FÜR TESTZWECKE
METHOD OF EVALUATING THE CONSEQUENCES OF AN IMPACT ON A PIECE OF STRUCTURAL COMPOSITE MATERIAL, FOR TEST PURPOSES

(30) Priorité: 05.11.2003 FR 0312992
(43) Date de publication de la demande: 19.07.2006
(73) Titulaire: ArianeGroup SAS, 75015 Paris (FR)
(72) Inventeur: BRASSIER, Pascale, F-33127 MARTIGNAS SUR JALLES (FR); PERES, Patrick, F-33160 SAINT AUBIN DE MEDOC (FR)
(74) Mandataire: Ipside
(86) Numéro de dépôt international: PCT/FR2004/050442
(87) Numéro de publication internationale: WO 2005/045389

(56) Documents cités:
- EP-A- 0 538 580
- GB-A- 2 107 213
- GB-A- 2 194 062
- US-A1- 2002 129 658
- HOFFMANN K ET AL: "EDV-UNTERSTUETZTE AUSWERTUNG VON FLAECHENPRESSUNGSMESSUNGEN MIT FUJI-DMF AN KRANBAHNEN COMPUTER AIDED EVALUATION OF PRESSURE MEASUREMENTS ON CRANE RUNWAYS BY MEANS OF FUJI PRESCALE FILM" FORTSCHRITT-BERICHTE VDI, XX, XX, no. 679, 1988, pages 367-379, XP001094852

## Description

La présente invention se rapporte à la détection d'impacts sur des pièces structurales constituées d'un matériau composite.

Les matériaux composites constitués de fibres ou filaments minéraux ou organiques, synthétiques ou naturels liés entre eux par une matrice de polymères organiques, sont des matériaux qui ont d'excellentes propriétés mécaniques statiques et dynamiques (résistance à la fatigue) pour une densité faible.

Les pièces dites structurales qui doivent concilier propriétés mécaniques optimales et faible masse, sont celles qui exploitent le mieux possible l'intérêt de ces matériaux, et doivent être définies au plus juste.

Toutefois, les matériaux composites restent fragiles, ils sont en particulier sensibles aux chocs (ou impacts), qui produisent des délaminages et des pertes d'intégrité des matériaux, du fait de leur complexité résultant de l'empilement de couches de matières différentes et de leur faible allongement à rupture de l'ordre de 1 %.

Leur utilisation en milieu industriel demande donc des précautions particulières, ou des sur-dimensionnements qui leur font perdre une partie de leur intérêt.

Le but de l'invention est d'assurer de façon passive un suivi permanent des pièces en matériau composite durant toute leur vie, depuis leur fabrication jusqu'à leur retrait d'utilisation, de façon à ce qu'on puisse être assuré qu'elles ont en permanence leur intégrité et sont donc en état de remplir leur fonction.

Plus précisément, l'invention s'intéresse à la détection d'impacts résultant de chocs dits « basse énergie ». Cette famille de chocs concerne les petits chocs de la vie courante, tels ceux engendrés par la chute d'un outil : les vitesses sont alors de l'ordre du m/s, et les énergies mises en jeu de l'ordre de la dizaine de Joules.

Lors des chocs « basse énergie », les phénomènes mis en jeu s'interprètent mécaniquement comme une sollicitation mécanique classique : on considère que le matériau subit une force de compression qui se traduit par l'apparition d'un état de contrainte triaxial dans le matériau. Selon le niveau de cet état de contrainte, il y a rupture ou simple déformation, réversible, du matériau.

Il faut par ailleurs noter que les contraintes dues aux chocs se superposent aux contraintes initiales dans le matériau, elles même dépendant de la géométrie de la pièce concernée et de la façon dont elle est sollicitée, si bien qu'un même choc n'induira pas forcément la même détérioration de matériau, de même d'ailleurs qu'à même énergie, des chocs pourront avoir des effets différents selon la forme de l'objet générateur de l'impact.

La détection de ce type de choc est communément pratiquée sur les matériaux composites.

Suivant une première approche appliquée sur les pièces en matériau composite en général, notamment les pièces destinées aux avions, on se base, selon une procédure dite BVID (Barely Visible Impact Damage), sur un seuil de profondeur d'empreinte due à un choc détectable fixé à 0,3 mm environ lorsque l'état de surface est uniforme, au delà duquel la pièce est considérée comme défectueuse.

Cette approche présente évidemment l'inconvénient que l'on ne peut pas exploiter toutes les caractéristiques des matériaux composites car un abattement doit être pris pour tenir compte du BVID, conduisant à la fabrication des pièces à un surdimensionnement de sécurité.

La présente invention ne vise pas ce type de pièces, mais plus précisément des pièces structurales en matériau composite présentant le meilleur rapport propriétés mécaniques/masse, c'est-à-dire des pièces dimensionnées au plus juste et dont la marge de sécurité est réduite.

C'est le cas par exemple dans le domaine des lanceurs des réservoirs sous pression en matériau composite, utilisés soit pour pressuriser les moteurs, soit pour contenir les ergols, soit comme réserve de gaz ou de liquides, soit comme enveloppe des propulseurs à poudre.

Ces réservoirs sont en général constitués d'une « peau interne » plus communément appelée liner, sur laquelle est bobinée une fibre préimpégnée de résine.

Les fibres sont en carbone, verre, Kevlar, la résine est époxyde, polyester, etc.

Le liner sert en principe à étancher le réservoir, il peut avoir d'autres fonctions comme celle d'isolant thermique pour une enveloppe de propulseur à poudre.

Du fait de leur utilisation spatiale, ces réservoirs sont conçus de façon optimale, quasiment sans marge, la pression d'éclatement étant seulement 1,5 fois la pression de service, si bien que toute détérioration du matériau composite peut avoir des conséquences catastrophiques. On conçoit donc qu'il est très important de pouvoir garantir au moment de leur utilisation que ces réservoirs sont structuralement indemnes, et qu'en particulier ils n'ont pas subi de chocs non détectés.

A ce jour, il n'est pas possible d'apporter la garantie que les réservoirs de ce type n'ont pas subi avant leur utilisation d'impact d'énergie trop forte.

En effet, s'il existe bien par ailleurs, suivant une seconde approche de détection, des méthodes de révélation de chocs, notamment des chocs « basse énergie », ces méthodes sont soit inappropriées, soit insuffisantes.

En effet, ces méthodes connues de révélation de chocs se divisent en deux catégories, à savoir des méthodes analysant le matériau dans sa masse et des méthodes analysant le matériau en surface.

Les premières sont certes intéressantes mais utilisent des techniques complexes telles que l'émission acoustique ou à base de fibres optiques qui sont encore au stade du laboratoire et nécessitent des moyens de traitement du signal complexes et volumineux peu adaptés à l'accompagnement des pièces durant leur vie.

La seconde catégorie utilise des revêtements qu'il s'agit ensuite d'analyser, notamment par examen visuel.

Le principe de ces méthodes à examen visuel est bien connu. Il est défini par exemple dans les documents GB 2 194 062 A, FR 2 663 122 A1, EP 0 538 580 A1, GB 2 107 213 A et US 2002/0129658 A1. Suivant ce principe, des microcapsules remplies d'un produit se rompent quand elles sont soumises à un certain niveau de pression. Ces produits sont de préférence fluorescents -comme un ressuage- et l'examen des pièces à la recherche de traces de choc doit se faire avec une lumière Ultra Violette.

Cette recherche des défauts compliquée, complétée du fait qu'il faut que les produits utilisés soient insensibles et stables dans une large fourchette de température et d'hygrométrie avant et après détection, font que ces méthodes n'ont pas été utilisées jusqu'à ce jour.

Un autre point, essentiel, qu'il faut souligner est que ce principe de détection n'aboutit qu'à une détection qualitative des chocs et nullement à une détection quantitative.

En effet, une telle détection donne seulement l'indication qu'une pression d'une certaine valeur a été exercée à la surface du matériau examiné mais aucune indication sur l'ampleur des éventuels désordres structuraux provoqués dans les sous-couches de la zone impactée.

L'invention propose un procédé de détection du type à examen visuel mais qui permette de lier de façon quantitative les chocs et ce qui est observé, c'est-à-dire de corréler l'énergie des chocs et l'endommagement du matériau impacté.

A cet effet, l'invention a pour objet un procédé d'évaluation à des fins de contrôle des conséquences d'un impact sur une pièce en matériau composite structurale, notamment d'un impact à faible vitesse et à faible énergie, dans lequel on revêt la pièce à surveiller d'un film du type à changement de couleur sous l'effet d'une pression et dont l'intensité de la couleur obtenue sous un impact est directement reliée à l'énergie du choc reçu, caractérisé en ce qu'avant application du film sur la pièce :
- on étalonne le film par essais d'impact sur des pièces témoins identiques à ladite pièce, ou des éprouvettes représentatives de cette dernière, revêtues dudit film, afin d'établir une relation entre l'énergie du choc et la modification d'aspect du film,
- on expertise les zones des pièces témoins ou éprouvettes ainsi impactées par un moyen de qualification approprié du type à rayons X, à ultrasons ou autre, afin de corréler lesdites modifications d'aspect et la nature et l'étendue des éventuels désordres structuraux des couches sous-jacentes de la zone impactée,
- et on établit une échelle de correspondances permettant de qualifier à volonté un aspect déterminé comme seuil limite d'acceptation de la pièce considérée.

Une pièce structurale en matériau composite ainsi revêtue dudit film peut être suivie de manière permanente, depuis sa fabrication jusqu'à son utilisation ou son retrait d'utilisation, par un simple examen visuel pouvant être effectué à tout moment. Si au cours d'un tel examen, la pièce révèle un impact dont l'aspect correspond sur ladite échelle de correspondances à un niveau égal ou supérieur à celui défini comme seuil limite, la pièce sera mise hors service comme étant affectée d'un endommagement interne la rendant impropre à sa fonction.

Le film utilisable conformément à l'invention est une structure du type constituée d'un complexe souple comprenant une matrice dans laquelle sont noyées des micro capsules ou analogues qui se brisent sous l'effet d'une contrainte, libérant ainsi les produits qu'elles renferment et qui ont des propriétés optiques différentes selon qu'elles sont encapsulées ou libérées dans la matrice. Les coques des micro capsules peuvent être sensibles à des contraintes d'intensités différentes. La matrice est en général une résine, le produit au final étant soit une peinture, soit un film à coller sur la pièce à surveiller.

Une structure particulièrement recommandée pour la mise en oeuvre du procédé de l'invention est constituée par le film commercialisé sous la dénomination commerciale PRESSUREX® par la Société Sensor Products, Inc., East Hannover NJ, Etats Unis d'Amérique.

Ce film est constitué d'un sandwich formé de deux films polyester minces entre lesquels sont disposées une couche de micro-capsule et une couche d'un révélateur de couleur, lesdites micro capsules étant susceptibles de se rompre sous l'effet d'une pression calibrée et de colorer la couche révélatrice sous jacente, l'intensité de la couleur obtenue étant directement reliée au quantum d'énergie de pression exprimée en Joule, qui a été appliquée sur le film.

D'autres types de film révélateur de choc selon le même principe et incorporant des micro-sphères, micro-tubes ou autres, susceptibles de se rompre sous la pression et d'engendrer en conséquence une modification de couleur peuvent bien entendu être également utilisés.

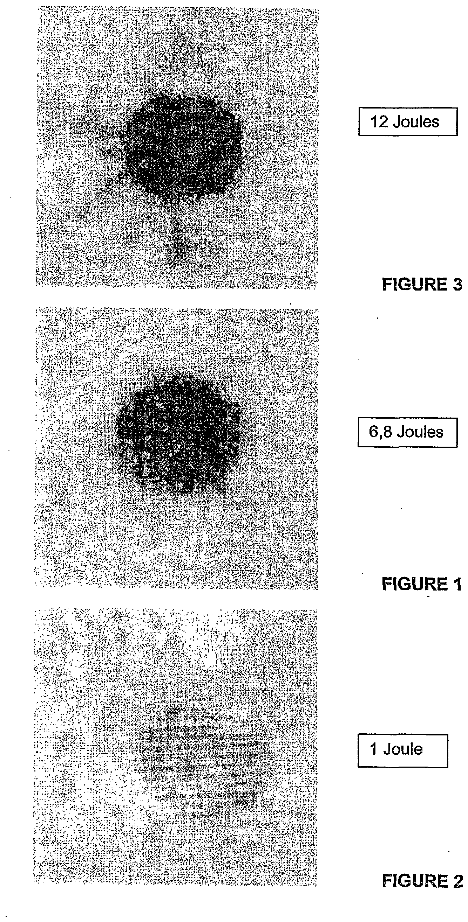

Conformément à l'invention et en se référant aux figures 1 à 3 des dessins annexés, on va tout d'abord étalonner le film par des essais d'impact. A cet effet, on réalise, de préférence et si possible sur des pièces témoins identiques à la pièce à surveiller mais plus généralement sur des éprouvettes calibrées représentatives de la pièce, des essais d'impacts calibrés à différents niveaux d'énergie en sorte d'établir en correspondance à ces divers niveaux d'énergie appliqués une échelle d'aspects visuels observés après chaque essai, à savoir une gradation d'intensité de couleur de l'empreinte puisque l'intensité de couleur est l'image du quantum d'énergie appliquée lors du choc.

La figure 1 illustre une empreinte réalisée sur un film PRESSUREX® du type « high » conçu pour la plage de pression 500-1300 bars, placé sur une éprouvette de 100mm X 150mm de surface et de 2mm d'épaisseur, constituée d'un certain nombre de plis drapés de matériau composite, ladite éprouvette ayant été impactée à l'aide d'un obus à extrémité sphérique, conformément à la norme AITM 1.0010 Edition 2 de Juin 1994.

L'impact, de diamètre 13 mm, de la figure 1 correspond à une énergie de 6, 8 joules.

On va ainsi obtenir toute une gamme d'empreintes d'impact correspondant à une gamme déterminée d'énergie d'impact, ces empreintes se distinguant entre elles par une intensité de couleur dont la gradation s'observe par la densité et l'étendue des éléments colorés de la trame représentée sur la figure 1.

Ensuite, pour chaque éprouvette, on va expertiser la zone impactée, c'est-à-dire l'examiner à l'aide d'un moyen approprié, tel que rayons X ou ultrasons, afin d'identifier d'éventuels désordres dans les plis sous-jacents à l'empreinte, révélés par une modification de la distribution des contraintes dans la masse de l'éprouvette et dont il résulterait des infléchissements de certains plis, voire des cisaillements inter laminaires créant des délaminages de couches rendant le matériau composite impropre à sa destination.

La figure 1 représente une empreinte d'un impact de 6, 8 joules qui s'est avéré générer des désordres d'une ampleur considérée comme inadmissible. Par suite, le type d'empreinte de la figure sera considérée comme le seuil déclenchant le retrait ou la mise hors service de toute pièce munie d'un film identique à celui de la figure 1 et qui, à l'inspection visuelle, porterait une empreinte d'impact de même intensité de couleur que celle de ladite figure 1.

Si la pièce inspectée présente une empreinte du type de la figure 2, à savoir une trame colorée moins dense que celle de la figure 1, ce sera le signe d'un impact reçu d'énergie (1 joule) inférieure à celle de l'impact de la figure 1, ne rendant pas la pièce impropre à sa destination. Si, au contraire, le contrôle visuel fait apparaître une empreinte du type de la figure 3, à densité colorée plus intense que celle de la figure 1 (correspondant à un impact d'une énergie de 12 joules), la pièce a fortiori sera à rebuter ou remplacer.

Les films PRESSUREX® sont disponibles commercialement sous forme d'une gamme de produits de diverses « sensibilités » à la pression, par exemple film « Low » utilisable dans la plage 25-100 bars, « Médium » utilisable dans la plage 100-500 bars et « High » utilisable dans la plage 500-1300 bars.

On choisira le type de film approprié à la nature de la pièce à contrôler, c'est-à-dire en sorte que l'énergie d'impact limite que puisse supporter la pièce sans endommagement rédhibitoire se situe à l'intérieur de la plage de « sensibilité » à la pression dudit film.

Des essais d'étalonnage effectués sur des pièces en vraie grandeur ou sur des morceaux de ces pièces s'avérant généralement coûteux, on recourra de préférence à des essais d'étalonnage sur des éprouvettes de dimensions réduites représentatives de la pièce à surveiller, par exemple par une modélisation en vue d'obtenir des éprouvettes de même rigidité de poinçonnement que la zone à étudier de la pièce réelle.

Il est à noter par ailleurs que des essais ont montré que le film PRESSUREX® est particulièrement stable à la température en ce sens que la réponse du film à la même énergie d'impact reste inchangée sous différentes températures.

C'est ainsi qu'un échantillon de film ayant séjourné environ 45 minutes à 70°C et un échantillon conservé à température ambiante ont donné, en réponse à une même énergie d'impact, une empreinte dont les trames colorées étaient substantiellement identiques. Enfin, une telle stabilité s'observe également dans le temps. C'est ainsi qu'un film ayant reçu préalablement un impact calibré a été exposé à une température de 130°C pendant 1 heure sans qu'une altération de la trame colorée consécutive à l'impact ne soit constatée.

Le procédé de contrôle de pièces selon l'invention est fiable et adapté à des conditions d'emploi complexes.

Il permet par un simple contrôle visuel périodique ou non des pièces à surveiller de s'assurer à tout moment si la pièce en question est dans un état d'intégrité ou au contraire a subi un ou des impacts dont le caractère dommageable ou non est instantanément apprécié, quel que soit le temps écoulé entre le ou les impacts et l'instant de contrôle et que la température ambiante avant ou après lesdits impacts ait varié ou non, même substantiellement.

Le procédé de l'invention s'applique à une grande diversité de pièces structurales composites et en particulier aux réservoirs structuraux composites pour application spatiale tels que les réservoirs de gaz ou liquide à haute pression utilisés dans les lanceurs spatiaux, de forme sphérique, cylindro-sphérique, cylindro-elliptiques ou toriques, constitués d'une enveloppe interne étanche métallique ou en matière plastique sur laquelle sont bobinées des fibres pré-imprégnées de résine.

## Revendications

1. Procédé d'évaluation à des fins de contrôle des conséquences d'un impact sur une pièce en matériau composite structurale, notamment d'un impact à faible vitesse et à faible énergie, dans lequel on revêt la pièce à surveiller d'un film du type à changement de couleur sous l'effet d'une pression et dont l'intensité de la couleur obtenue sous un impact est directement reliée à l'énergie du choc reçu, **caractérisé en ce qu'**avant application du film sur la pièce :
- on étalonne le film par essais d'impact sur des pièces témoins identiques à ladite pièce, ou des éprouvettes représentatives de cette dernière, revêtues dudit film, afin d'établir une relation entre l'énergie du choc et la modification d'aspect du film,
- on expertise les zones des pièces témoins ou éprouvettes ainsi impactées par un moyen de qualification approprié du type à rayons X, à ultrasons ou autre, afin de corréler lesdites modifications d'aspect et la nature et l'étendue des éventuels désordres structuraux des couches sous-jacentes de la zone impactée,
- et on établit une échelle de correspondances permettant de qualifier à volonté un aspect déterminé comme seuil limite d'acceptation de la pièce considérée.

2. Procédé suivant la revendication 1, **caractérisé en ce que** le film à changement de couleur sous l'effet d'une pression est un film comprenant une matrice dans laquelle sont noyées des micro-capsules ou analogues susceptibles de se briser sous l'effet d'un seuil de contrainte déterminé.

3. Procédé suivant la revendication 2, **caractérisé en ce que** ledit film est le film dénommé commercialement PRESSUREX®, disponible sous diverses plages de sensibilité à la pression, la plage de pression appropriée étant choisie en sorte que l'énergie d'impact limite acceptable pour la pièce à surveiller se situe à l'intérieur de ladite plage de pression.

4. Application du procédé selon l'une des revendications 1 à 3, à des réservoirs de gaz ou liquide à haute pression pour lanceurs spatiaux, constitués d'une enveloppe interne étanche métallique ou en matière plastique sur laquelle sont bobinées des fibres pré-imprégnées de résine.

## Patentansprüche

1. Verfahren zur Beurteilung der Folgen eines Schlags auf ein Teil aus einem strukturellen Verbundwerkstoff, insbesondere eines Schlags mit niedriger Geschwindigkeit und niedriger Energie, bei dem das zu überwachende Teil mit einem Film eines Typs beschichtet wird, der unter Druckeinwirkung seine Farbe ändert, wobei die Intensität der bei einem Schlag angenommenen Farbe in direktem Zusammenhang mit der Energie des Schlags steht, **dadurch gekennzeichnet, dass** vor dem Aufbringen des Films auf das Teil:
- die Folie durch Schlagversuche an mit der Folie beschichteten identischen oder repräsentativen Prüfstücken kalibriert wird, um einen Zusammenhang zwischen der Schlagenergie und der Veränderung des Erscheinungsbildes der Folie herzustellen,
- die Bereiche der einem Schlag unterzogenen Prüfstücke durch ein geeignetes Prüfmittel wie Röntgen, Ultraschall oder anderes begutachtet werden, um die genannten Änderungen des Erscheinungsbildes und die Art und das Ausmaß möglicher struktureller Störungen der unter der betroffenen Zone liegenden Schichten zu korrelieren,
- und eine Korrespondenzskala festgelegt wird, mit der ein bestimmtes Erscheinungsbild nach Belieben als Schwellwert für die Akzeptanz des betreffenden Teils qualifiziert werden kann.

2. Verfahren nach Anspruch 1, **dadurch gekennzeichnet, dass** die Folie, die unter Druckeinwirkung ihre Farbe ändert, eine Matrix umfasst, in die Mikrokapseln oder Ähnliches eingebettet sind, die unter der Wirkung einer gegebenen Belastungsschwelle brechen können.

3. Verfahren nach Anspruch 2, **dadurch gekennzeichnet, dass** die Folie kommerziell als PRESSUREX® bezeichnet wird, die mit verschiedenen Druckempfindlichkeitsbereichen erhältlich ist, wobei der geeignete Druckbereich so gewählt wird, dass die zulässige Schlagenergiegrenze für das zu überwachende Teil innerhalb dieses Druckbereichs liegt.

4. Anwendung des Verfahrens nach einem der Ansprüche 1 bis 3 auf Hochdruck-Gas- oder Flüssigkeitstanks für Trägerraketen, bestehend aus einem abgedichteten Innenmantel aus Metall oder Kunststoff, auf den mit Harz vorimprägnierte Fasern gewickelt sind.

## Claims

1. Method of evaluating the consequences of an impact on a piece of structural composite material, for test purposes, particularly a low-speed, low-energy impact, in which the piece to be monitored is coated with a film of the type that changes colour when a pressure is applied and of which the intensity of the colour obtained owing to an impact is directly linked to the energy of the impact received, **characterised in that** before application of the film on the piece:
- the film is calibrated by performing impact tests on control parts that are identical to said piece, or on test parts that are representative of the latter, coated with said film, in order to establish a link between the energy of the impact and the change in the appearance of the film,
- the areas of the control or test parts affected by the impact are assessed using a suitable X-ray-, ultrasound- or other-type qualification means, in order to correlate said changes in the appearance and the nature and extent of possible structural damage of the underlying layers of the affected area,
- and a correspondence scale is established, which can be used as desired to determine a given aspect as an acceptance threshold limit of the piece considered.

2. Method according to claim 1, **characterised in that** the film that changes colour when a pressure is applied is a film comprising a matrix wherein micro-capsules or similar are embedded that are able to break under the effect of a determined stress threshold.

3. Method according to claim 2, **characterised in that** said film is the film commercially known as PRESSUREX®, available in various ranges of sensitivity to pressure, with the suitable pressure range being chosen in such a way that the limit energy impact that is acceptable for the piece to be monitored is within said pressure range.

4. Application of the method according to one of claims 1 to 3, to high-pressure liquid or gas reservoirs for space launchers, constituted of an inner sealed metal or plastic material jacket whereon fibres pre-impregnated with resin are wound.
